Europäisches Patentamt

(19) European Patent Office

Office européen des brevets

(11) Publication number: **0 270 169 B1**

(12) **EUROPEAN PATENT SPECIFICATION**

(45) Date of publication of patent specification: **30.09.92**　(51) Int. Cl.⁵: **G02F 1/13, H04N 5/74**

(21) Application number: **87202295.9**

(22) Date of filing: **24.11.87**

(54) **Liquid crystal display projection having improved contrast.**

(30) Priority: **25.11.86 US 934871**

(43) Date of publication of application:
**08.06.88 Bulletin 88/23**

(45) Publication of the grant of the patent:
**30.09.92 Bulletin 92/40**

(84) Designated Contracting States:
**DE FR GB IT NL SE**

(56) References cited:
**DE-A- 2 559 254**
**DE-B- 1 487 779**
**US-A- 4 088 400**

**APPLIED OPTICS, vol. 19, no. 13, July 1, 1980, D. ARMITAGE "Liquid crystal voltage controlled retardation display", pp 2235-2238**

**IBM JOURNAL OF RESEARCH AND DEVELOPMENT, vol. 26, no. 2, March 1982, New York, A.G. DEWEY et al.: "The Application of GaAlAs Lasers to High-Resolution Liquid-Crystal Projection Displays", pp 177-185.**

(73) Proprietor: **North American Philips Corporation**
**100 East 42nd Street 9th Floor**
**New York, N.Y. 10017(US)**

(72) Inventor: **Magocs, Stephen**
**c/o INT. OCTROOIBUREAU B.V. Prof. Holstlaan 6**
**NL-5656 AA Eindhoven(NL)**

(74) Representative: **Cobben, Louis Marie Hubert et al**
**INTERNATIONAAL OCTROOIBUREAU B.V.**
**Prof. Holstlaan 6**
**NL-5656 AA Eindhoven(NL)**

## Description

A projection system according to Claim 1.

Rear projection television systems utilizing liquid crystal displays have been proposed before. In these known systems, the liquid crystal display consists of a polarizer, the actual liquid crystals, and an analyzer, all packaged as a unit. Light falling on the unit is polarized in a particular plane by the polarizer. This light, herein referred to as first polarized light, then passed through the liquid crystals. Liquid crystals which have been charged, i.e. to which an electrical control signal has been applied, rotate the plane of polarization to a second plane. If the liquid crystals are arranged in a matrix, the control signal may be the simultaneous energization of its column and line address inputs. The control signal is applied to the liquid crystals in accordance with the information to be displayed on a projection screen. Such information may, for example, be data or a television picture. The crystals are generally arranged in a plane, a projection screen being placed at a predetermined distance from the plane of the liquid crystals and parallel thereto. The light coming from the liquid crystals thus contains light polarized in a first plane and light polarized in a second plane. The analyer then selects one of the planes, i.e. light polarized in one of the planes will pass through the analyzer, while light polarized in the other plane is blocked. The selected light then passes through a projection lens system and is imaged onto a projection screen. A major problem with this type of projection arrangement is the lack of contrast resulting from loss of, on the average, 50% of the light in the analyzer. Even standard contrast enhancing techniques, such as blackening the grooves between the lenticulars on the front of the screen, use of diffusers, etc. do not yield a picture having adequate contrast.

It is an object of the present invention to increase the contrast in the picture on a projection screen generated by light from a liquid crystal display.

It is a further object of the present invention to create such contrast enhancement in an economical fashion and without changes in the basic operation of the system.

The projection system according to the present invention is characterized in, that the analyzer means are arranged in a position closer to said screen than to said plurality of liquid crystals. The analyzer is the same as the analyzer normally forming the output element in a liquid crystal display, i.e. transmits only light polarized in a particular plane. The selected light then forms the display on the screen.

Preferably, the analyzer is laminated onto the front surface of the screen. This tends to prevent damage to the screen as well as providing enhanced contrast.

Alternatively, the analyzer may be laminated to the rear surface of the screen or even centrally between the rear and front parts of the screen itself.

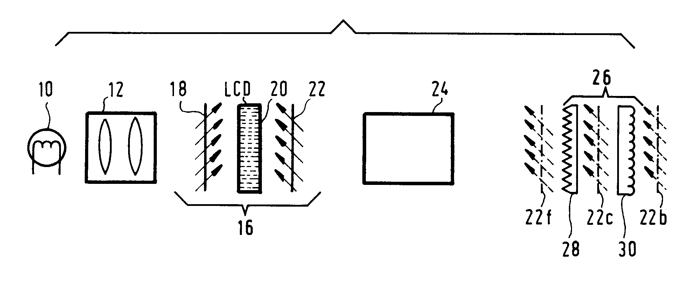

The operation of the system and further advantages thereof will best be understood with reference to the following description read in conjunction with the drawing. The single figure is a schematic diagram of a basic liquid crystal projection display illustrating both the conventional analyzer location and the possible analyzer locations in accordance with the present invention.

In the single figure, a source of illumination 10, e.g. an arc lamp, emits light which passes through a condensing lens system 12. The light passing out of condensing system 12 is constituted by substantially parallel rays of random polarization. This light passes through a liquid crystal display 16. Liquid crystal display 16 is constituted first by a polarizer 18 which polarizes the light in a first selected plane. The polarized light then impinges on a liquid crystal array, here denoted by reference numeral 20. The liquid crystals array will, in general, be matrix addressed. The actual addressing system is not part of the present invention and is not necessary for the understanding thereof. However, briefly, each liquid crystal will have two address leads, one for a column address, the other for a row address. The picture information to be transmitted is typically stored in sample-and-hold circuits, one for each column. All column address lines of a given row are tied together, as are all row address lines of a given column. The rows are energized in sequence, for example by a shift register. Each column element within a given row receives picture information stored in its sample-and-hold circuit. A particular liquid crystal is only charged when receiving a signal simultaneously on both of its address lines. When the crystal is uncharged, the light passes through without change in the plane of polarization. When it is charged, light impinging upon it is rotated to a second polarization plane, normally 90° removed from the first polarization plane. An analyzer 22, when part of the liquid crystal display, i.e. when in the conventional analyzer location indicated in the figure, then blocks light polarized in one of the planes, while transmitting the light polarized in the other plane. The analyzer will thus, on the average, suppress one-half of the light falling upon it.

The light at the output of the analyzer, when the analyzer is in its conventional location, then passes through a projection lens system 24 which focuses the image onto a projection screen 26. Projection screen 26 consists of a rear portion 28 and a front portion 30. The display created on front portion 30 is viewed by the audience.

The present invention is based on the realization that the analyzer itself would provide enhanced contrast if placed in the vicinity of, or incorporated with the screen. Three possible locations, namely in front of the screen in the direction of light propagation, in back of the screen in the direction of light propagation, or interposed as a central layer between the front and back portions of the screen are illustrated in the figure.

The analyzer and polarizer are generally made of the same material. A typical material is cellulose acetate butyrate. The analyzer is a plastic sheet several millimeters thick which is readily laminated onto the screen in any of the three indicated positions by use, for example, of a lacquer bond. Such lamination techniques are well known in the art and present no manufacturing difficulty.

Since the plane of polarization does not change either in the projection lens system or when the light passes through the screen, no error is introduced by positioning the screen in any of the three possible locations illustrated in the figure. For the type of screen illustrated, namely one which has a lentricular surface facing the audience and a fresnel surface at its rear, locating the analyzer between the lenticular surface and the audience will provide the additional benefit of protecting the screen from damage by scratches, dust, etc.

Although the present invention has been illustrated in conjunction with a highly simplified monochrome rear projection system, it is equally applicable to color television receiver applications and front projection system. In fact, it is readily applicable in any system utilizing liquid crystal display and a projection screen. The scope of the invention is thus not to be limited to the particular embodiments shown, but is to include various different implementations which will readily occur to one skilled in the art and which are encompassed by the following claims.

## Claims

1. A projection system comprising an illumination source (10, 12) furnishing light rays;

a liquid crystal display unit (16) positioned in the path of the light rays, the display unit comprising polarizer means (18) and an array of liquid crystal display sections (20) positioned in the path of the light each for rotating the plane of polarization of the light in response to a control signal applied thereto;

means for applying the control signals to the liquid crystal display sections in accordance with information to be displayed;

a projection lens (24) for imaging the array;

a projection screen (26) in the image plane of the projection lens, the screen having a front surface facing an audience room and an opposed rear surface; and

an analyzer means (22b, 22c, 22f) oriented to transmit light containing the information to be displayed, characterized in that the analyzer means is laminated to the projection screen.

2. A projection system as claimed in claim 1, characterized in that the analyzer means (22f) is laminated to the rear surface of the projection screen (26).

3. A projection system as claimed in claim 1, characterized in that the analyzer means (22b) is laminated to the front surface of the projection screen (26).

4. A projection system as claimed in claim 1, characterized in that the analyzer means (22c) forms a layer between the front and rear surfaces of the projection screen (26).

## Patentansprüche

1. Projektionseinrichtung mit

einer Lichtstrahlen liefernden Beleuchtungsquelle (10, 12);

einer im Weg der Lichtstrahlen angeordneten Flüssigkristallanzeigeeinheit (16), wobei die Anzeigeeinheit Polarisatormittel (18) und eine Matrix von Flüssigkristallanzeigeabschnitten (20) enthält, die in dem Lichtweg angeordnet sind, wobei jeder Abschnitt die Polarisationsebene des Lichtes als Reaktion auf ein ihm zugeführtes Steuersignal drehen soll;

Mitteln zur Zuführung der Steuersignale zu den Flüssigkristallanzeigeabschnitten entsprechend der wiederzugebenden Information;

einem Projektionsobjektiv (24) zur Abbildung der Matrix;

einem Projektionsschirm (26) in der Bildebene des Projektionsobjektivs, wobei der Schirm eine dem Zuschauerraum zugewandte Vorderfläche und eine entgegengesetzte Rückfläche hat; und

einem Analysatormittel (22b, 22c, 22f), das für die Durchlassung von die wiederzugebende Information enthaltendem Licht ausgerichtet ist, dadurch gekennzeichnet, daß das Analysatormittel auf den Projektionsschirm fest aufgebracht ist.

2. Projektionseinrichtung nach Anspruch 1, dadurch gekennzeichnet, daß das Analysatormittel (22f) auf die Rückfläche des Projektionsschirms (26) fest aufgebracht ist.

3. Projektionseinrichtung nach Anspruch 1, dadurch gekennzeichnet, daß das Analysatormittel (22b) auf die Vorderfläche des Projektionsschirms (26) fest aufgebracht ist.

4. Projektionseinrichtung nach Anspruch 1, dadurch gekennzeichnet, daß das Analysatormittel (22c) eine Schicht zwischen der Vorder- und der Rückfläche des Projektionsschirms (26) bildet.

**Revendications**

1. Système de projection comprenant une source d'éclairage (10, 12) qui fournit des rayons lumineux;

une unité d'affichage à cristal liquide (16) disposée dans le trajet des rayons lumineux, l'unité d'affichage comportant des moyens polariseurs (18) et une configuration de sections d'affichage à cristal liquide (20) disposées dans le trajet de la lumière pour tourner chacune le plan de polarisation de la lumière en réponse à un signal de commande y appliqué;

des moyens pour appliquer des signaux de commande aux sections d'affichage à cristal liquide conformément à l'information à afficher;

une lentille de projection (24) pour la représentation de la disposition;

un écran de projection (26) dans le plan d'image de la lentille de projection, l'écran présentant une surface avant vis-à-vis d'une salle d'audience et une surface arrière opposée; et

un moyen analyseur (22b, 22c, 22f) orienté pour transmettre la lumière contenant l'information à afficher, caractérisé en ce que le moyen analyseur est appliqué sous forme d'une couche sur l'écran de projection.

2. Système de projection selon la revendication 1, caractérisé en ce que le moyen analyseur (22f) est appliqué sous forme d'une couche sur la surface arrière de l'écran de projection (26).

3. Système de projection selon la revendication 1, caractérisé en ce que le moyen analyseur (22b) est appliqué sous forme d'une couche sur la surface frontale de l'écran de projection (26).

4. Système de projection selon la revendication 1, caractérisé en ce que le moyen analyseur (22c) constitue une couche entre les surfaces frontale et arrière de l'écran de projection (26).